# EUROPEAN PATENT APPLICATION

(11) **EP 1 457 407 A2**
(43) Date of publication of application: **15.09.2004**
(21) Application number: 04075762.7
(22) Date of filing: 09.03.2004
(51) Int. Cl.: B62D 25/14

(54) **Finished internal panel for a vehicle and method for producing the same**

(30) Priority: 10.03.2003 IT mi20030441
(71) Applicant: Industrialesud S.p.A., 64100 Teramo (IT)
(72) Inventor: Di Sante, Giuseppe, 64026 Roseto Degli Abruzzi (Teramo) (IT)
(74) Representative: De Gregori, Antonella

(57) **Abstract**

A rationalized production method of an internal finished panel (12) of a vehicle, said internal finished panel (12) comprising functional or aesthetic interface devices with the user (14) situated on a base panel (16); the method includes at least one super-injection phase on the base panel (16) already manufactured, said at least one super-injection phase producing and connecting to the base panel (16) at least one functional or aesthetic interface device with the user (14).

## Description

The present invention relates to a rationalized production method of an internal finished panel of a vehicle.

The invention also relates to an internal finished panel obtained by means of said method.

In the field of automobile production, panels in which the various devices interfaced with the user (handles, operating levers, push-button panels, lighting systems, etc..) are already positioned, are manufactured and assembled in the interior of the vehicle. A typical example of said panels are those situated inside the vehicle doors.

At present, all manufacturers of these internal panels order external companies to produce the interfaced devices: these devices (which are normally service or functioning accessories) are then applied to the panels.

The known manufacturing method comprises the production of the main basic piece, generally through a productive process which makes use of moulding and shearing instrumentations.

The interfaced devices are manufactured by the injection moulding of plastic material and/or with moulds for polyurethane foaming. These devices are applied to the finished product by means of gluing or grafting; this operation may be manual or automated, using, for example, equipped assembly benches.

The objective of the present invention is to obviate the above-mentioned drawbacks and, in particular to indicate a rationalized production method for an internal finished panel of a vehicle and to produce a panel which allows a considerable reduction in the production costs.

Another objective of the present invention is to indicate a rationalized production method for an internal finished panel of a vehicle and to produce a panel, guaranteeing absolute precision in the positioning of the interfaced devices on the base panel.

A further objective of the present invention is to indicate a method for the rationalized production of an internal finished panel of a vehicle and to produce a panel which is particularly reliable.

These and other objectives according to the present invention are achieved, by indicating a rationalized production method for an internal finished panel of a vehicle and producing a finished internal panel, as specified in claims 1 and 10, respectively.

Further characteristics are envisaged in the subsequent claims.

The characteristics and advantages of a rationalized production method for a finished internal panel of a vehicle and of a finished internal panel manufactured by means of said production method, according to the present invention, will appear more evident from the following illustrative but nonlimiting description, referring to the enclosed schematic drawings, wherein:

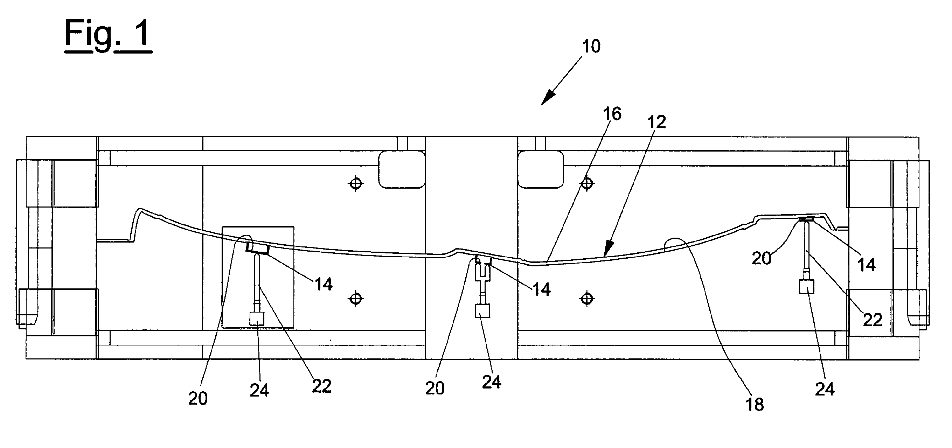

figure 1 is a longitudinal raised side view of the equipment used for preparing an internal finished panel of a vehicle according to the present invention;

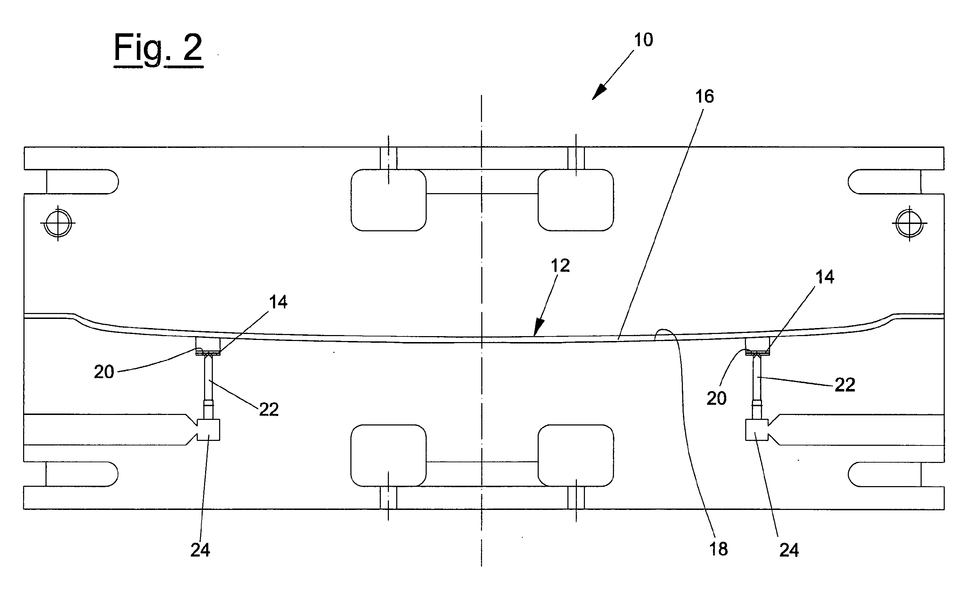

figure 2 is a front raised side view of the equipment of figure 1.

With reference to the figures, these illustrate the equipment, indicated as a whole with 10, used in a processing phase for obtaining a finished panel 12 of a vehicle (not shown in the figures).

The finished internal panel 12 comprises devices of functional or aesthetic interface with the user 14.

According to the present invention, in order to produce said finished internal panel 12 equipped with said devices 14, there is a first production phase of a base panel 16 of the internal finished panel 12, made according to the known technique (normally by means of a production process which makes use of moulding and shearing instrumentations).

This is followed by a positioning phase of the base panel 16 in the equipment 10. It comprises at least one mould with a first cavity 18 suitable for housing, at least partially, said base panel 16.

Said equipment 10 has at least one additional cavity 20, connected to the first cavity 18: said additional cavities 20 are fed, singly or in groups, by injection channels 22, connected to hot chambers 24, according to the known technology for the injection moulding of plastic materials and/or polyurethane foaming.

The subsequent processing phase according to the rationalized production method of the invention, is the injection of the plastic material and/or the polyurethane foaming, of said additional cavities 20, wherein the functional or aesthetic interface devices 14 are produced.

The base panel 16, complete with the functional or aesthetic interface devices 14 forming the finished internal panel 12, is discharged by opening the mould 10 and is ready to be assembled on the vehicle.

By following the rationalized production method according to the invention, the functional or aesthetic interface devices 14 are applied directly and simultaneously onto the base panel 16, by means of a super-injection process; after constructing the base panel 16, the same is inserted into the mould 10 prepared for the super-injection which is normally contemporaneous for all the functional or aesthetic interface devices 14 required by the panel.

The grafting of the functional or aesthetic interface devices 14 onto the base panel 16 is effected by means of mechanical (for example, by clutching) and/or chemical fixing (for example, by adhesion).

It should also be noted that there is the interesting possibility of excluding and/or activating the additional cavities 20, according to necessity, with the consequent availability of super-injection moulds, which can produce internal panels 12 with more or fewer accessories.

The characteristics of the rationalized production method of a finished internal panel of a vehicle and of the finished internal panel manufactured according to said production method, object of the present invention, are evident from the above description, as are also the relative advantages, among which the following can be mentioned:
- absolute precision in positioning the functional or aesthetic interface devices on the base panel;
- greater control of the production as all parts of the equipment converge to a single unit, which is the super-injection mould;
- less manpower, as the labour force destined for gluing the functional or aesthetic interface devices according to the known technique, becomes redundant
- absolute versatility in the composition of the different panels, due to the possibility of the exclusion and/or activation of the additional injection cavities;
- plants or moulds or so-called hot malt glue dispensers, or assembly benches currently used for gluing, are no longer necessary;
- possibility of the immediate control of the finished panel, complete with the functional or aesthetic interface devices;
- elimination of all problems linked to the control and acceptance in the assembly site of the panels onto the vehicle, as the finished panels can be produced locally and no longer by external companies;
- elimination of problems relating to the handling, on the part of external companies, of equipment, possibly owned by the purchaser, outside the facility;
- abating of non-quality costs for the non-acquisition of functional or aesthetic interface devices on the part of third companies, as, with this invention, the only cost sustained is substantially that of the raw material for the production of the functional or aesthetic interface devices applied.

Finally, it is evident that numerous variations and modifications can be applied to the rationalized production method of an internal finished panel of a vehicle and the finished internal panel manufactured according to said production method, all forming part of the invention; furthermore, all the details can be substituted by technically equivalent elements. In practice, the material used, as well as the forms and dimensions, can vary according to technical demands. The protection scope of the invention is consequently delimited by the enclosed claims.

## Claims

1. A rationalized production method of an internal finished panel (12) of a vehicle, said internal finished panel (12) comprising functional or aesthetic interface devices with the user (14) situated on a base panel (16), **characterized in that** it comprises at least one super-injection phase on said base panel (16) already manufactured, said at least one super-injection phase producing and connecting to said base panel (16) at least one functional or aesthetic interface device with the user (14).

2. The rationalized production method according to claim 1, **characterized in that** said super-injection follows the injection moulding technique of plastic material and/or of polyurethane foaming.

3. The rationalized production method according to claim 1, **characterized in that** for said super-injection a set of equipment (10) is used comprising at least one mould with a first cavity (18) suitable for housing, at least partially, said base panel (16), said equipment (10) having at least one additional cavity (20), connected to said first cavity (18).

4. The rationalized production method according to claim 3, **characterized in that** said additional cavities (20) are fed, singly or in groups, by injection channels (22), connected to hot chambers (24), said additional cavities (20) being suitable for producing said functional or aesthetic interface devices (14).

5. The rationalized production method according to claim 1, **characterized in that** said connection between the base panel (16) and said functional or aesthetic interface devices (14) is effected by means of mechanical or chemical fixing.

6. The rationalized production method according to claim 5, **characterized in that** said mechanical fixing is a mechanical clutching.

7. The rationalized production method according to claim 5, **characterized in that** said chemical fixing is a chemical adhesion.

8. The rationalized production method according to claim 4, **characterized in that** said additional cavities (20) can be excluded or activated by said injection channels (22).

9. The rationalized production method according to claim 1, **characterized in that** said base panel (16) is produced by means of moulding and shearing instrumentations.

10. A finished internal panel (12) of a vehicle, said finished internal panel (12) comprising functional or aesthetic interface devices with the user (14) situated on a base panel (16), **characterized in that** it is manufactured according to claim 1.
